# EUROPEAN PATENT APPLICATION

(11) **EP 4 808 051 A1**
(43) Date of publication of application: **16.09.2026**
(21) Application number: 26163115.4
(22) Date of filing: 09.03.2026
(51) Int. Cl.: H04L 12/42, H04L 12/437, H04L 45/00, H04L 45/28

(54) **TRAFFIC PROTECTION METHOD, AND COMMUNICATION APPARATUS AND SYSTEM**

(30) Priority: 11.03.2025 CN 202510287581
(71) Applicant: HUAWEI TECHNOLOGIES CO., LTD., Shenzhen 518129 (CN)
(72) Inventor: Chu, Bosen, Shenzhen, 518129 (CN)
(74) Representative: Gill Jennings & Every LLP

(57) **Abstract**

A traffic protection method, and a communication apparatus and system are provided, and relate to the field of communication technologies. The method is applied to an MRP ring network. The MRP ring network includes a first forwarding path for carrying traffic and a second forwarding path for traffic protection. The method includes: electing a first MRC as a first MRM in response to a link failure occurring between the first MRC and a second MRC on the first forwarding path; switching a transmission path of the traffic from the first forwarding path to the second forwarding path after the link failure occurs; and after the link failure is recovered, when the second forwarding path is normal, still maintaining transmission of the traffic on the second forwarding path, and not switching back to the first forwarding path. In this way, link convergence and temporary interruption of data transmission that are caused by a switchback are avoided, and data transmission stability of the MRP ring network is improved.

## Description

### TECHNICAL FIELD

This application relates to the field of communication technologies, and in particular, to a traffic protection method, and a communication apparatus and system.

### BACKGROUND

A media redundancy protocol (media redundancy protocol, MRP) is a protocol used to improve network redundancy and reliability, and is mainly applied to industrial Ethernet (for example, fields such as automation and a control system). The MRP aims to ensure an automatic switch to a secondary path when a link or a device in a network fails, to ensure continuous running of the network. An MRP ring network is a ring network structure implemented based on the MRP. To be specific, in the ring network structure, all network devices are connected through a redundant link, to form a closed loop.

In a normal case, the MRP ring network selects a primary path to transmit data, and the secondary path remains in a secondary state. If the primary path fails, the MRP ring network automatically switches to the secondary path for data transmission. After a failure of the primary path is recovered, the MRP switches back a data transmission path, to switch back the data transmission path from the secondary path to the primary path. A path switching process causes link convergence and temporary interruption of data transmission, affecting data transmission stability of the MRP ring network.

### SUMMARY

This application provides a traffic protection method, and a communication apparatus and system, to prevent traffic of an MRP ring network from being switched back from a primary path to a secondary path, and improve data transmission stability of the MRP ring network.

According to a first aspect, a traffic protection method is provided, applied to an MRP ring network. The MRP ring network includes a first forwarding path for carrying traffic and a second forwarding path for traffic protection. The method includes: electing a first media redundancy client (media redundancy client, MRC) as a first media redundancy manager (media redundancy manager, MRM) in response to a link failure occurring between the first MRC and a second MRC on the first forwarding path; switching a transmission path of the traffic from the first forwarding path to the second forwarding path after the link failure occurs; and after the link failure is recovered, when the second forwarding path is normal, still maintaining transmission of the traffic on the second forwarding path, and not switching back to the first forwarding path.

The foregoing MRC and the foregoing MRM are different MRP redundancy domain device roles that can be switched in the MRP ring network, and different MRP redundancy domain device roles have different functions. The foregoing role switch between MRCs and MRMs may be implemented by a media redundancy automanager (media redundancy automanager, MRA). Hardware corresponding to the MRC and the MRM in the MRP ring network may be a communication apparatus, the communication apparatus can be connected to a network to implement interconnection and interworking between networks, and data transmission can be performed between communication apparatuses. The communication apparatus may be various devices, modules, programs, and the like that can implement a function of the communication apparatus. The device may be, for example, a router or a switch. In this embodiment of this application, an example in which the communication apparatus is a switch is mainly used for description.

In the traffic protection method provided in this embodiment of this application, when a link failure occurs, an adjacent communication apparatus such as the first MRC of a failed link is elected as a new first MRM based on an MRA election procedure. When a link failure occurs on the first forwarding path, the first MRM blocks a port, namely, a port corresponding to a failed link in the first MRM based on an MRP protocol, to normally forward the traffic on the second forwarding path through another port. The traffic cannot be normally forwarded through any port corresponding to the failed link before and after the link failure is recovered. A topology of the MRP ring network does not change. Therefore, after the link failure is recovered, when the second forwarding path is normal, the first MRM does not sense a change in the topology of the MRP ring network, transmission of the traffic on the second forwarding path is still maintained, and switching back to the first forwarding path is not performed. In this way, link convergence and temporary interruption of data transmission that are caused by a switchback are avoided, and data transmission stability of the MRP ring network is improved.

In a possible implementation, electing the first MRC as the first MRM includes: adjusting a priority of the first MRC from a second priority to a first priority; and electing the first MRC as the first MRM based on the first priority in MRA election.

In this way, in an MRA election procedure, a priority of an adjacent MRC of the failed link is increased, so that the MRM dynamically migrates with a change in the failed link. This ensures that a blocked port of the MRM after a link failure occurs is a port corresponding to the failed link, and the topology of the MRP ring network does not change after the link failure is recovered.

In a possible implementation, the first priority is a highest priority currently existing in the MRP ring network.

For example, in addition to the first MRC, other communication apparatuses whose priorities are respectively 0xA005, 0xA006, and 0xA007 exist in the MRP ring network, and the priorities are sequentially arranged as 0xA005, 0xA006, and 0xA007 in descending order. The first priority may be any priority higher than 0xA005, for example, 0xA001 or 0xA002.

Based on the foregoing implementation, the priority of the first MRC is higher than a priority of another communication apparatus in the MRP ring network, and a first MRC with a highest priority is elected as a new MRM in the MRA election procedure.

Optionally, the first priority is a highest priority of an MRA in a configurable priority range that is in the MRP ring network and that is specified in an MRP.

For example, the first priority is 0x9000.

In this way, the first priority is the highest priority of the MRA in the configurable priority range. This can avoid existence of a communication apparatus with a higher priority than the first MRC in the MRP ring network, and ensure that the first MRC adjacent to the failed link is elected as the new MRM based on the first priority.

In a possible implementation, the method further includes: also adjusting a priority of the second MRC to the first priority when a link failure occurs between the first MRC and the second MRC; and electing the first MRC as the first MRM based on a media access control (media access control, MAC) address of the first MRC and a MAC address of the second MRC in a case of a same priority.

Based on the foregoing implementation, when it is ensured that the newly elected MRM is an adjacent communication apparatus of the failed link, existence of a plurality of MRMs in the MRP ring network is avoided.

In a possible implementation, after electing the first MRC as the first MRM, the method further includes: adjusting a priority of the first MRM from the first priority to a third priority. The third priority is lower than the first priority and is higher than a priority of an MRC in the MRP ring network other than the first MRM.

Based on the foregoing implementation, the priority of the first MRM is the third priority, so that in a normal traffic transmission process of the MRP ring network, the first MRM can keep an MRA redundancy domain device role as an MRM, and a case in which the priority of the first MRM is still the first priority when a link failure occurs next time in the MRP ring network and conflicts with an adjusted priority of the communication apparatus adjacent to the failed link is avoided. In this way, it can be ensured that the communication apparatus adjacent to the failed link can be elected as an MRM based on the first priority when a link failure occurs next time in the MRP ring network.

In a possible implementation, the method further includes: blocking a first port of the first MRM. The first port is a port through which the first MRM is connected to the second MRC.

In a possible implementation, electing the first MRC as the first MRM based on the first priority in the MRA election includes: sending, by the first MRC, a first MRP test packet through a port, where the first MRP test packet includes a MAC address of the first MRC and the first priority, and the first MRP test packet indicates an MRA that receives the test packet not to respond to the first MRP test packet when a local priority is lower than the first priority; and determining, by the first MRC, that a negative response packet that carries the MAC address of the first MRC is not received within preset duration, and configuring an MRA role as the first MRM.

In a possible implementation, the method further includes: The first MRC sets a best MRM source address as a MAC address of the first MRM; and the first MRC sets a best MRM priority as the first priority.

In a possible implementation, configuring an MRP role of a second MRM as an MRC based on a MAC address of the first MRM and a MAC address of the second MRM includes: The first MRM receives a second MRP test packet sent by the second MRM, where the second MRP test packet includes the MAC address of the second MRM and the first priority; the first MRM sends a negative response packet to the second MRM when the MAC address of the first MRM is less than the MAC address of the second MRM, where the negative response packet includes the MAC address of the first MRM; and in response to receiving the negative response packet, the second MRM configures the MRP role of the second MRM as the MRC when the MAC address of the first MRM is less than the MAC address of the second MRM.

According to a second aspect, a communication system is provided. The communication system includes a plurality of communication apparatuses forming an MRP ring network, and each of the plurality of communication apparatuses is connected to a previous communication apparatus and a next communication apparatus respectively through two ports to form the MRP ring network. The MRP ring network includes a first forwarding path for carrying traffic and a second forwarding path for traffic protection. The plurality of communication apparatuses include a first MRC and a second MRC.

The first MRC and the second MRC are configured to collaboratively elect the first MRC as a first MRM in response to a link failure occurring between the first MRC and the second MRC on the first forwarding path. A transmission path of the traffic is switched from the first forwarding path to the second forwarding path after the link failure occurs; and after the link failure is recovered, when the second forwarding path is normal, transmission of the traffic on the second forwarding path is still maintained, and switching back to the first forwarding path is not performed.

In a possible implementation, the communication system is further configured to implement the traffic protection method according to any one of the first aspect or the possible implementations of the first aspect. For specific content and beneficial effects thereof, refer to the descriptions of the first aspect. Details are not described herein again.

According to a third aspect, a communication apparatus is provided, including a transceiver module and a processing module. The transceiver module and the processing module are configured to perform the traffic protection method according to any one of the first aspect or the possible implementations of the first aspect. In an example, the communication apparatus may be a network device such as a router or a switch, or may be a functional component configured to perform the foregoing method in a network device. In another example, the communication apparatus may alternatively be a chip configured to perform the foregoing method. When the communication apparatus is a chip, the transceiver module is an interface circuit in the chip, and the processing module is a processing circuit in the chip.

According to a fourth aspect, a communication apparatus is provided. The communication apparatus includes a processor and a memory, and the processor is configured to execute instructions stored in the memory, so that the communication apparatus performs the traffic protection method according to any one of the first aspect or the possible implementations of the first aspect.

According to a fifth aspect, a computer program product is provided, including instructions. When the instructions are run on a processor, the traffic protection method according to any one of the first aspect or the possible implementations of the first aspect is implemented.

According to a sixth aspect, a computer-readable storage medium is provided, including computer program instructions. When the computer program instructions are executed by a communication apparatus, the communication apparatus performs the traffic protection method according to any one of the first aspect or the possible implementations of the first aspect.

In this application, based on the implementations provided in the foregoing aspects, the implementations may be further combined to provide more implementations.

The following descriptions include more specific content about the implementations provided in the foregoing aspects.

### BRIEF DESCRIPTION OF DRAWINGS

FIG. 1 is a diagram of an architecture of a communication system according to an embodiment of this application;
FIG. 2 is a schematic flowchart 1 of switching a forwarding path in an MRP ring network according to an embodiment of this application;
FIG. 3a is a schematic flowchart 1 of a traffic protection method according to an embodiment of this application;
FIG. 3b is a schematic flowchart 2 of switching a forwarding path in an MRP ring network according to an embodiment of this application;
FIG. 4 is a schematic flowchart 2 of a traffic protection method according to an embodiment of this application;
FIG. 5 is a diagram of an MRA election procedure according to an embodiment of this application;
FIG. 6A and FIG. 6B are a diagram 1 of interaction of a traffic protection method according to an embodiment of this application;
FIG. 7 is a diagram 2 of interaction of a traffic protection method according to an embodiment of this application;
FIG. 8A and FIG. 8B are a diagram 3 of interaction of a traffic protection method according to an embodiment of this application;
FIG. 9 is a diagram of modules of a communication apparatus according to an embodiment of this application;
FIG. 10 is a diagram 1 of a structure of a communication apparatus according to an embodiment of this application;
FIG. 11 is a diagram 2 of a structure of a communication apparatus according to an embodiment of this application; and
FIG. 12 is a diagram of a structure of a communication system according to an embodiment of this application.

### DESCRIPTION OF EMBODIMENTS

This application provides a traffic protection method, applied to an MRP ring network. The MRP ring network includes a first forwarding path for carrying traffic and a second forwarding path for traffic protection. In the method, a first MRC is elected as a first MRM in response to a link failure occurring between the first MRC and a second MRC on the first forwarding path. In this way, the MRM dynamically migrates with a change in a failed link. This ensures that a blocked port of the MRM after a link failure occurs is a port corresponding to the failed link, and a topology of the MRP ring network does not change after the link failure is recovered. Therefore, after the link failure is recovered, when the second forwarding path is normal, the first MRM does not sense a change in the topology of the MRP ring network, transmission of the traffic on the second forwarding path is still maintained, and switching back to the first forwarding path is not performed. In this way, link convergence and temporary interruption of data transmission that are caused by a switchback are avoided, and data transmission stability of the MRP ring network is improved.

The technical solution in this application may be applied to not only a current communication technology or communication apparatus, but also a future communication technology or communication apparatus, or a communication system or a network system that includes a communication apparatus. Terms used in embodiments of this application are only used to explain specific embodiments of this application, but are not intended to limit this application. The following first briefly describes some concepts that may be used in this application.

In a network architecture, a redundancy domain is a logical group including a plurality of devices (such as a switch or a router) or links, and implements objectives such as high availability, load balancing, and/or fast failure recovery based on a redundancy mechanism (for example, a backup path and a failover protocol).

A media redundancy protocol is a protocol used for redundant link management in industrial Ethernet, and aims to improve reliability and failure tolerance of a network. A basic principle of the media redundancy protocol is to use a redundant link to prevent a single-point failure in the network. When a link or a device fails, network communication can be quickly restored.

An MRP ring network is used as an example. Each communication apparatus supporting an MRP in a communication system is connected to a previous communication apparatus and a next communication apparatus respectively through two ports to form the MRP ring network, and all communication apparatuses in the MRP ring network form a redundancy domain.

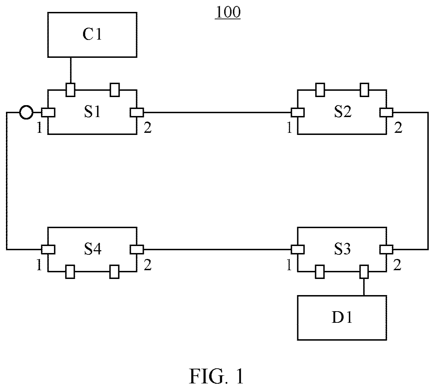

FIG. 1 is a diagram of an architecture of a communication system according to an embodiment of this application. The communication system includes a redundancy domain 100, and the redundancy domain 100 includes four communication apparatuses, for example, S1 to S4. S1 is connected to S2 and S4 respectively through two ports, S2 is connected to S1 and S3 respectively through two ports, S3 is connected to S2 and S4 respectively through two ports, and S4 is connected to S3 and S1 respectively through two ports.

For example, a left port of each communication apparatus in S1 to S4 is a port 1 of the communication apparatus, a right port is a port 2 of the communication apparatus, and a circle represents blocking. When a port 1 of S1 is blocked, the port 1 of S1 can receive traffic but cannot send the traffic. Consequently, the traffic cannot be forwarded through the secondary port 1 of S1. A traffic forwarding path in the redundancy domain 100 is S1-S2-S3-S4.

In a possible implementation, the traffic may be input from a communication apparatus connected to the redundancy domain 100 to any communication apparatus in S1 to S4, and output from any communication apparatus other than the communication apparatus through which the traffic is input to a communication apparatus connected to the redundancy domain 100.

For example, a network architecture to which the redundancy domain 100 belongs may be a data transmission network of an industrial Internet campus. S1 is connected to C1, and S3 is connected to D1. Traffic of C1 is input into the redundancy domain 100 through S1, and a traffic forwarding path of C1 may be C1-S1-S2-S3-D1. Traffic transmission on the traffic forwarding path C1-S1-S2-S3-D1 may be bidirectional. In this case, a traffic forwarding path from C1 to D1 successively passes through a port 2 of S1, a port 1 of S2, a port 2 of S2, and a port 2 of S3, and a traffic forwarding path from D1 to C1 successively passes through the port 2 of S3, the port 2 of S2, the port 1 of S2, and the port 1 of S1. The traffic forwarding path C1-S1-S2-S3-D1 may be referred to as a primary path or a first forwarding path, and C1-S1-S4-S3-D1 may be referred to as a secondary path or a second forwarding path. Based on the traffic forwarding path C1-S1-S4-S3-D1, a traffic forwarding path from C1 to D1 successively passes through the port 1 of S1, a port 1 of S4, a port 2 of S4, and a port 1 of S3, and a traffic forwarding path from D1 to C1 successively passes through the port 1 of S3, the port 2 of S4, the port 1 of S4, and the port 1 of S1.

C1 and D1 may be any device or apparatus having a data transmission function. For example, C1 is a control device, and D1 is a device controlled by the control device. C1 may be implemented by a computer, a programmable logic controller (programmable logic controller, PLC), or a dedicated controller, and D1 may be implemented by a computer, a programmable logic controller, a dedicated controller, or a physical apparatus connected to a controller. For example, C1 indicates a PLC, and D1 is a device (device).

The PLC is an industrial automation control device, and is used in an automation control system to control a mechanical device or a production process through programming. The PLC can process an input signal, and output a control signal based on preset program logic, and is widely used in fields such as a production line, robot control, and a power system.

The device is generally a physical apparatus connected to the PLC or another controller. The device can be an input device (input device), for example, a sensor, a limit switch, or a temperature probe, or an output device (output device), for example, a motor, a solenoid valve, or an indicator. A temperature control system is used as an example. D1 may be a temperature sensor, D1 transmits data to C1 through the traffic forwarding path C1-S1-S2-S3-D1, C1 starts a cooling fan based on the received data, and the cooling fan may be another device controlled by C1.

The following describes an MRP redundancy domain device role in the redundancy domain 100.

For example, an MRP redundancy domain device role of S1 is an MRM, and MRP redundancy domain device roles of S2 to S4 are MRCs.

The MRM is a core control node in a ring network, and is responsible for monitoring an MRP ring network status and managing a redundancy switch. Main functions of the MRM include: periodically sending a test packet (for example, an MRP test packet) to check connectivity of the ring network; activating a secondary path when detecting that a link is interrupted, to restore communication; and maintaining a logical blocking point in the ring network to prevent a broadcast storm.

Two ports of the MRM may be respectively referred to as a primary port and a secondary port. When the MRP ring network is in a normal communication state, the secondary port is in a blocked state. A setting of the primary port and the secondary port may be flexibly configured. For example, in FIG. 1, the port 1 of S1 serves as a secondary port, and the port 2 serves as a primary port. In a possible example, alternatively, the port 2 of S1 may serve as a secondary port, and the port 1 serves as a primary port.

The MRC is a normal node in the ring network, receives instructions from the MRM, and forwards the test packet. Main functions of the MRC include: detecting the test packet sent by the MRM, to determine a connection status between the MRC and the ring network; and reporting a link abnormality to the MRM. All devices or communication apparatuses in the MRP ring network other than the MRM are MRCs.

Alternatively, the MRC and the MRM in the redundancy domain 100 may be MRAs. The MRA is a device that has a potential MRM capability, and a plurality of MRAs determine a final MRM through negotiation.

FIG. 1 is merely a diagram of an architecture of a communication system according to an embodiment of this application. A location relationship between devices, components, modules, and the like shown in the figure does not constitute any limitation.

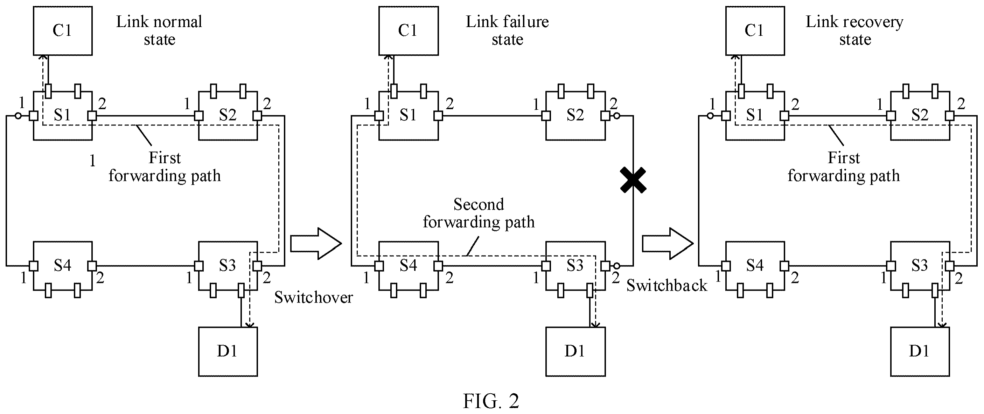

The following describes a running principle of the MRP ring network based on the MRP redundancy domain device role in the redundancy domain 100 with reference to FIG. 2.

FIG. 2 is a schematic flowchart 1 of switching a forwarding path in an MRP ring network according to an embodiment of this application.

As shown in FIG. 2, in a link normal state, traffic is normally transmitted through a transmission path, and traffic between C1 and D1 is forwarded through a first forwarding path, namely, C1-S1-S2-S3-D1.

In this case, as an MRM in the MRP ring network, S1 blocks a port (which is shown by a circle identifier) corresponding to a second forwarding path of S1, and receives and sends service traffic through a port corresponding to the first forwarding path. The blocked port is in a blocked state, and cannot forward the service traffic, but can forward traffic of an MRP control type such as a test packet and a negative response packet.

As an MRM in the MRP ring network, S1 periodically sends the test packet through a port, and the test packet is forwarded back to S1 by a communication apparatus in the MRP ring network. S1 periodically detects whether the test packet is received within preset duration.

Optionally, the test packet may be referred to as an MRP test packet or an MRP_TEST packet. The preset duration may be flexibly set according to a specific requirement such as a transmission delay of a packet transmission path, for example, 2 microseconds, 1 millisecond, 8 milliseconds, or 50 milliseconds.

As shown in FIG. 2, in a link failure state, after a link between S2 and S3 fails, the test packet sent by S1 cannot be forwarded back to S1 through the first forwarding path C1-S1-S2-S3-D1. If a timeout occurs when S1 receives the test packet, S1 determines that a link failure occurs on the first forwarding path.

When determining that a link failure occurs on the first forwarding path, S1 cancels a blocked state of a port 1, configures the port 1 to be in a forwarding state, and sends a topology change packet.

Optionally, the topology change packet may be referred to as an MRP_TopologyChange packet.

MRCs, namely, S2 to S4, in the MRP ring network receive the topology change packet, and update a local forwarding database (forwarding database, FDB) entry based on the topology change packet, so that a traffic transmission path between C1 and D1 is switched to the second forwarding path, namely, C1-S1-S4-S3-D1. Such a procedure may be referred to as switchover.

In the switchover procedure of the MRP ring network, an adjacent communication apparatus of a failed link configures an adjacent port of the failed link to be in a blocked state. For example, S2 sets a port connected to S3 to be in a blocked state, and S3 sets a port connected to S2 to be in a blocked state.

An FDB is a data table used by the communication apparatus (for example, a switch) to determine a traffic (for example, a data packet) forwarding path. The FDB includes a MAC address of each device in the network and corresponding port information. When receiving the data packet, the communication apparatus searches the FDB entry to determine a specific port to which the data packet needs to be forwarded.

As shown in FIG. 2, in a link recovery state, that is, after a link failure between S2 and S3 is recovered, the test packet sent by S1 can still be forwarded back to S1 through the first forwarding path C1-S1-S2-S3-D1. S1 reconfigures the port 1 to the blocked state and sends a topology change packet to notify the MRC in the MRP ring network. The MRCs, namely, S2 to S4, in the MRP ring network receive the topology change packet, and update the local FDB entry based on the topology change packet, so that the traffic transmission path between C1 and D1 is switched back to the first forwarding path. Such a procedure may be referred to as a switchback.

In the foregoing switchback procedure of the MRP ring network, the adjacent port of the failed link is configured to be in a blocked state, S1 configures the port 1 to be in a blocked state, and adjacent communication apparatuses such as S2 and S3 of the failed link cancel blocking of the adjacent port of the failed link, to switch the traffic transmission path back to the first forwarding path. In this way, a case in which both the first forwarding path and the second forwarding path in the MRP ring network are in a forwarding state is avoided, thereby ensuring that a topology loop of packet transmission is not formed in the MRP ring network.

In the foregoing switchback procedure of the MRP ring network, the MRP ring network performs link convergence due to a network topology change. Consequently, traffic in the MRP ring network is interrupted for a short period of time, causing poor service traffic transmission stability of a user.

This application provides a traffic protection method, so that link convergence and temporary interruption of data transmission that are caused by a switchback are avoided, and data transmission stability of an MRP ring network is improved.

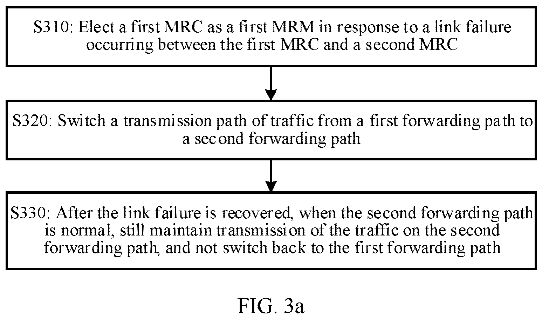

FIG. 3a is a schematic flowchart 1 of a traffic protection method according to an embodiment of this application. As shown in FIG. 3a, an example in which the traffic protection method is collaboratively implemented by communication apparatuses in the communication system shown in FIG. 1 is used for description. The traffic protection method may include the following steps.

S310: elect a first MRC as a first MRM in response to a link failure occurring between the first MRC and a second MRC.

In response to a link failure occurring between the first MRC and the second MRC, a priority of the first MRC is adjusted from a second priority to a first priority, and the first MRC is elected as the first MRM based on the first priority in MRA election. In embodiments of this application, all priorities are priorities of the MRA election, and priorities of electing communication apparatuses in an MRP ring network as MRMs in an MRA election procedure are sorted in descending order of the priorities.

The first MRM blocks a first port of the first MRM when a link failure occurs between the first MRC and the second MRC. The first port is a port through which the first MRM is connected to the second MRC.

The second priority is lower than the first priority.

To ensure that the first MRC can be elected as a new MRM in the MRA election procedure, the first priority is a highest priority currently existing in the MRP ring network.

Optionally, the first priority is a highest priority of an MRA in a configurable priority range that is in the MRP ring network and that is specified in an MRP.

The configurable priority range of the MRA may include MRA high priorities (MRA high priorities), for example, 0x9001 to 0x9FFF. The configurable priority range of the MRA may further include an MRA highest priority, for example, 0x9000.

The second priority is a priority that is configured for the first MRC before a link failure occurs. For example, any one of the MRA high priorities and MRA low priorities (MRA low priorities) is lower than the first priority. The MRA low priorities may be 0xA001 to 0xF000.

In a possible implementation, when a link failure occurs between the first MRC and the second MRC, the first MRC adjusts the priority of the first MRC from the second priority to the first priority. If the MRM does not receive a test packet within preset duration, the MRM triggers the MRA election procedure, to elect the first MRC as the first MRM based on the first priority in the MRA election.

For example, an MRM in the MRP ring network before a link failure occurs is S1, the first MRC is S3, and the second MRC is S2. When a link failure occurs, S3 adjusts the priority from the second priority to the first priority, and is elected as the first MRM based on the first priority in the MRA election procedure.

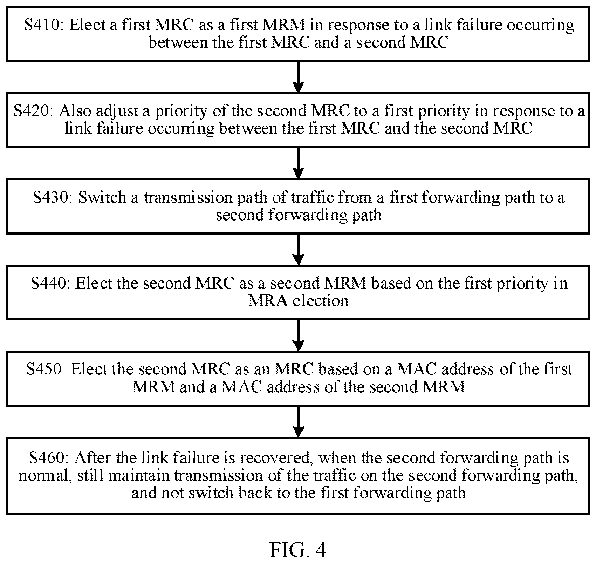

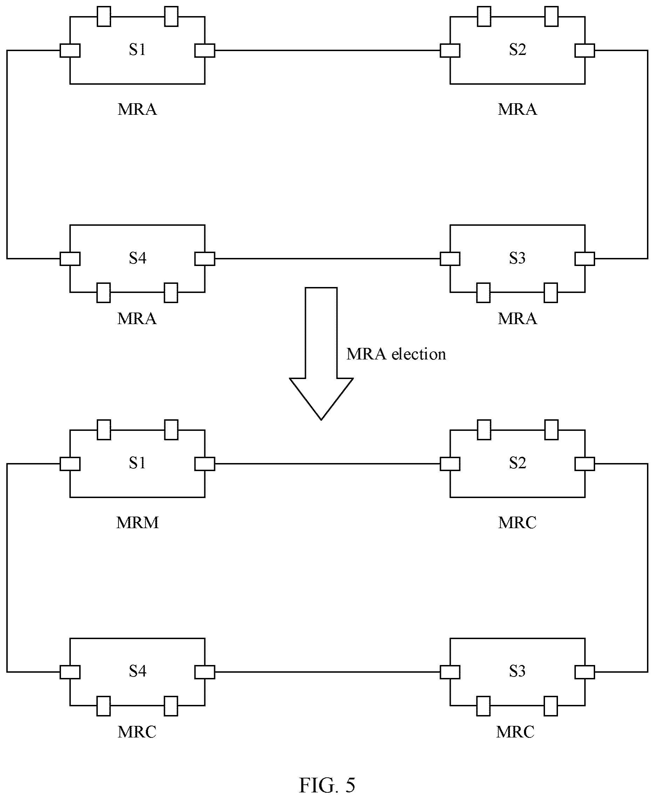

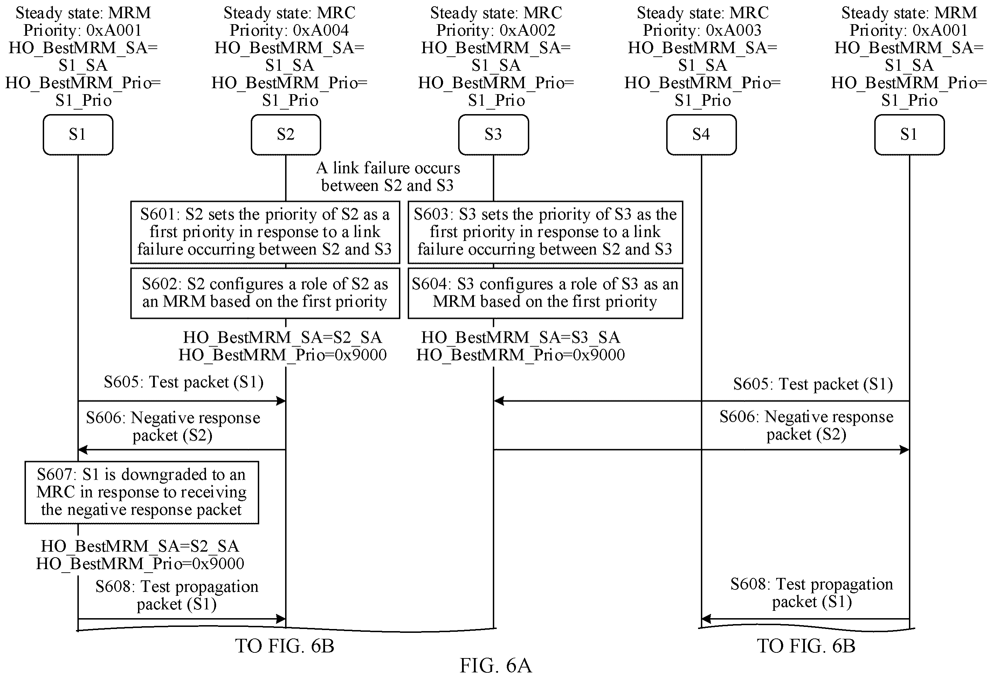

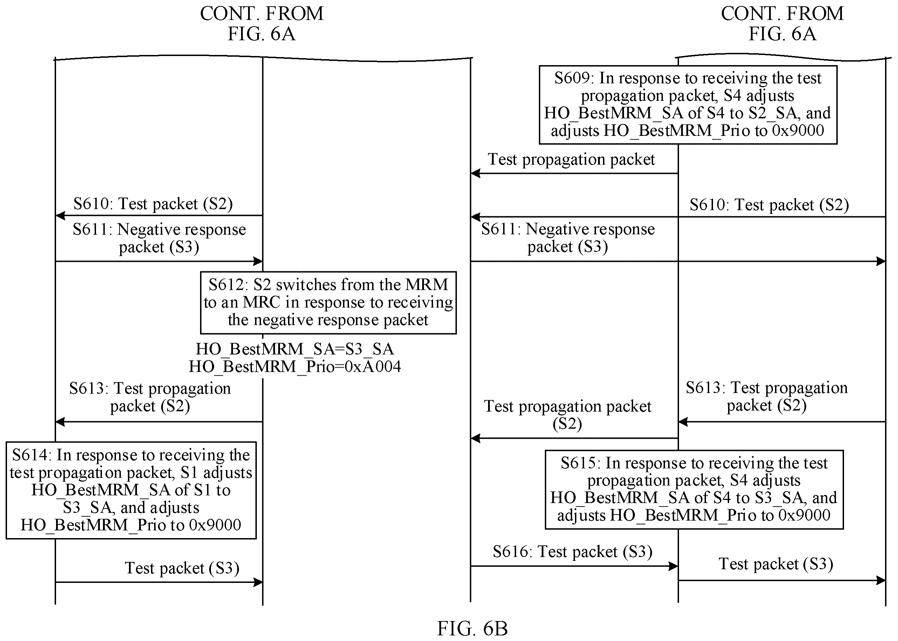

For a specific implementation of S310, refer to S410 to S450 shown in FIG. 4, step 1 to step 3 shown in FIG. 5, and S603 and S604 shown in FIG. 6A and FIG. 6B below. Details are not described herein again.

In a possible implementation, a priority of the second MRC is also adjusted to the first priority when a link failure occurs between the first MRC and the second MRC; and the first MRC is elected as the first MRM based on a MAC address of the first MRC and a MAC address of the second MRC in a case of a same priority.

A combination of a priority and a MAC address may be referred to as priority information. In the MRA election procedure, for two MRCs (or MRAs), it is determined, based on a priority comparison result, that an MRC with a higher priority is elected as an MRM. If priorities of the two MRCs (or MRAs) are the same, MAC addresses are compared. For example, an MRC with a smaller MAC address is elected as an MRM.

For specific content of determining, in the MRA election procedure, that the first MRC in the first MRC and the second MRC is the MRM of the MRP ring network, refer to S610 to S612 shown in FIG. 6A and FIG. 6B. Details are not described herein again.

In a possible implementation, it may be determined, in the following manner, that a link failure occurs between the first MRC and the second MRC.

The MRM in the MRP ring network determines, based on the test packet, that a link failure occurs between the first MRC and the second MRC.

In a possible implementation, the MRM in the MRP ring network periodically sends the test packet through a port, and determines, based on whether a timeout occurs when the test packet is received, whether a link failure occurs.

For example, S1 is the MRM in the MRP ring network. When receiving a test packet sent by S1, MRCs such as S2 to S4 in the MRP ring network forward the test packet. To be specific, when receiving a test packet through one port, each MRC sends the test packet through another port. In this way, if no link failure occurs in the MRP ring network, the test packet is returned to S1 through the MRP ring network; or if a link failure occurs in the MRP ring network (for example, a link between S2 and S3 is disconnected), the test packet cannot be returned to S1 through the MRP ring network.

If S1 does not receive the test packet within the preset duration, it is determined that a link failure occurs in the MRP ring network.

For example, the preset duration may be n test packet periodicities. Herein, n may be any value that is flexibly adjusted according to a requirement. For example, a value of n is 2, 3, 5, or 21. n=3 is used as an example. If S1 does not receive the test packet after sending the test packet for three times, it is determined that a link failure occurs in the MRP ring network.

S320: Switch a transmission path of traffic from the first forwarding path to the second forwarding path.

The MRM in the MRP ring network switches the transmission path of the traffic from the first forwarding path to the second forwarding path after the link failure occurs.

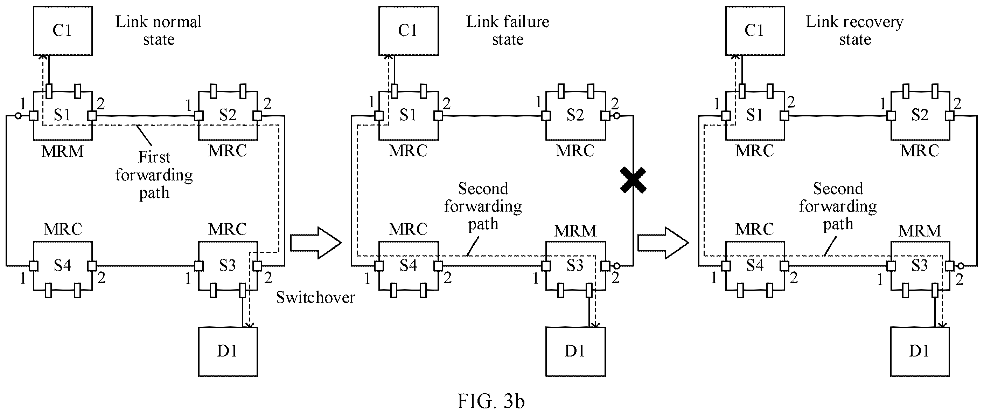

Based on the redundancy domain 100 shown in FIG. 1, switchover of a traffic forwarding path in the traffic protection method provided in this embodiment of this application is described with reference to FIG. 3b. In a link normal state, the traffic is normally transmitted through a transmission path, and traffic between C1 and D1 is forwarded through the first forwarding path, namely, C1-S1-S2-S3-D1. In a link failure state, after a link between S2 and S3 fails, the test packet sent by S1 cannot be forwarded back to S1 through the first forwarding path C1-S1-S2-S3-D1. If a timeout occurs when S1 receives the test packet, S1 determines that a link failure occurs on the first forwarding path. When S1 determines that a link failure occurs on the first forwarding path, S1 performs switchover, to switch a traffic transmission path between C1 and D1 to the second forwarding path, namely, C1-S1-S4-S3-D1.

S330: After the link failure is recovered, when the second forwarding path is normal, still maintain transmission of the traffic on the second forwarding path, and not switch back to the first forwarding path.

Based on the redundancy domain 100 shown in FIG. 1, a forwarding path after the link failure is recovered in the traffic protection method provided in this embodiment of this application is described with reference to FIG. 3b. In a link recovery state, after a link failure between S2 and S3 is recovered, S3 blocks a port through which S3 is connected to S2. In this case, the traffic cannot be normally forwarded through the blocked port of the failed link before and after the link failure is recovered. After the failure is recovered, if S3 does not sense a change in a topology of the MRP ring network, transmission of the traffic on the second forwarding path is still maintained, and switching back to the first forwarding path is not performed. In the traffic protection method, when a link failure occurs, an adjacent communication apparatus such as the first MRC of a failed link is elected as a new first MRM based on the MRA election procedure. When a link failure occurs on the first forwarding path, the first MRM blocks a port, namely, a port corresponding to the failed link in the first MRM based on the MRP protocol, to normally forward the traffic on the second forwarding path through another port. The traffic cannot be normally forwarded through any port corresponding to the failed link before and after the link failure is recovered. The topology of the MRP ring network does not change. In this way, after the link failure is recovered, when the second forwarding path is normal, because the port corresponding to the failed link in the first MRM is blocked, the network topology of the MRP ring network does not change after the failed link is restored, the first MRM does not sense the change in the topology of the MRP ring network, transmission of the traffic on the second forwarding path is still maintained, and switching back to the first forwarding path is not performed. In this way, link convergence and temporary interruption of data transmission that are caused by a switchback are avoided, and data transmission stability of the MRP ring network is improved.

The foregoing describes how to elect the first MRC adjacent to the failed link as the new first MRM in the MRA election procedure. In a specific implementation, in the MRA election procedure, the second MRC adjacent to the failed link is also elected as an MRM, namely, a second MRM. One of the first MRM and the second MRM is reserved based on MAC addresses, and the other MRM is elected as an MRC. With reference to FIG. 4, the following describes in detail how the second MRC determines a final MRM with the first MRC in the election procedure.

The following provides example descriptions of a specific implementation of S310 mentioned above. As shown in FIG. 4, an example in which the method is collaboratively implemented by communication apparatuses in the communication system shown in FIG. 1 is used for description. The traffic protection method may include the following steps.

S410: elect a first MRC as a first MRM in response to a link failure occurring between the first MRC and a second MRC.

S420: Also adjust a priority of the second MRC to a first priority in response to a link failure occurring between the first MRC and the second MRC.

S430: Switch a transmission path of traffic from a first forwarding path to a second forwarding path.

S440: elect the second MRC as a second MRM based on the first priority in MRA election.

The second MRC may be S2 in the redundancy domain 100 shown in FIG. 1. For a priority adjustment manner of the second MRC and a manner of electing the second MRC as an MRM in an MRA election procedure, refer to S310 in the traffic protection method shown in FIG. 3a. Details are not described herein again.

S450: Elect the second MRM as an MRC based on a MAC address of the first MRM and a MAC address of the second MRM.

After being referred to as MRMs in an MRP ring network, the first MRM and the second MRM each periodically send a test packet through a port. A communication apparatus that receives the test packet in the MRP ring network sends a negative response packet when a priority in priority information carried in the test packet is lower than a priority in local priority information. The negative response packet carries lower-priority information. For example, when the first MRM receives a test packet sent by the second MRM and both a priority of the second MRM and a priority of the first MRM are the first priority, if the MAC address of the first MRM is lower than the MAC address of the second MRM, it is comprehensively determined that the priority of the first MRM is higher than the priority of the second MRM, and the first MRM sends a negative response packet to the second MRM.

Optionally, the negative response packet may be referred to as an MRP_TestMgrNAck packet.

The negative response packet carries the MAC address of the second MRM. When receiving the negative response packet that carries the MAC address of the second MRM, the second MRM records the MAC address and the priority of the first MRM with a higher priority, and switches a role of the second MRM to an MRC.

That the second MRM records the MAC address and the priority of the first MRM with the higher priority may be that a best MRM priority (HO_BestMRM_Prio) of a local device is recorded as the priority of the first MRM, and a best MRM source address (HO_BestMRM_SA) is recorded as the MAC address of the first MRM. HO_BestMRM_SA indicates a source address (for example, a MAC address) of a communication apparatus that is most likely to be elected as an MRM in the MRP ring network and that is determined by the communication apparatus, and HO_BestMRM_Prio indicates a priority of the communication apparatus that is most likely to be elected as an MRM in the MRP ring network and that is determined by the communication apparatus.

For example, the first MRC is S3, and the second MRC is S2. When a link failure occurs, S2 adjusts the priority to the first priority, and is elected as the second MRM based on the first priority in the MRA election procedure. S2 sends a test packet through a port, and receives a negative response packet returned by S3 based on the test packet sent by S2. The negative response packet carries a MAC address of S2, and a role of S2 is changed to an MRC.

For specific content of electing S2 as an MRM and an MRC in the MRA election procedure, refer to S601, S602, and S610 to S612. Details are not described herein again.

In a possible implementation, after the first MRC is elected as the first MRM, the priority of the first MRM may be further adjusted from the first priority to a third priority. The third priority is lower than the first priority but is higher than a priority of an MRC in the MRP ring network other than the first MRM. In this way, a case in which the priority of the first MRM is still the first priority when a link failure occurs next time in the MRP ring network and conflicts with an adjusted priority of a communication apparatus adjacent to a failed link is avoided. It can be ensured that the communication apparatus adjacent to the failed link can be elected as an MRM based on the first priority when a link failure occurs next time in the MRP ring network.

S460: After the link failure is recovered, when the second forwarding path is normal, still maintain transmission of the traffic on the second forwarding path, and not switch back to the first forwarding path.

Based on the foregoing traffic protection method, when a link failure occurs, both the first MRC and the second MRC are elected as MRMs based on the same first priority, and then one of the MRMs is downgraded to an MRC based on MAC addresses of the two MRMs. Therefore, when it is ensured that a newly elected MRM is an adjacent communication apparatus of the failed link, existence of a plurality of MRMs in the MRP ring network is avoided.

The foregoing describes, with reference to FIG. 3a, FIG. 3b, and FIG. 4, how to elect an MRC adjacent to the failed link as a new MRM. Because the foregoing traffic protection methods all relate to the MRA election procedure, to better understand the MRA election procedure related to the traffic protection method provided in this embodiment of this application, the following describes in detail the MRA election procedure with reference to FIG. 5.

FIG. 5 is a diagram of an MRA election procedure according to an embodiment of this application. As shown in FIG. 5, the MRA election procedure may include step 1 to step 3.

Step 1: Initial roles of all MRAs in an MRP ring network are all MRMs. Each MRM sends, through two ports, a test packet including priority information of the MRM, and when receiving a test packet sent by another MRA (or referred to as an MRM), compares local priority information and priority information carried in the test packet. If a priority indicated by the priority information carried in the test packet received by the MRA is lower than a priority of the MRA, the MRA sends a negative response packet, and uses the negative response packet to carry a MAC address of an MRA with a lower priority. If the priority indicated by the priority information carried in the test packet received by the MRA is higher than the priority of the MRA, no processing is performed.

The redundancy domain 100 shown in FIG. 1 is used as an example. Initial roles of S1 to S4 when MRA election is started are all MRMs. A priority of S1 is higher than a priority of S2, a priority of S3, and a priority of S4. Therefore, S2, S3, and S4 separately receive a negative response packet that carries a MAC address of S2, a MAC address of S3, and a MAC address of S4 and that is sent by S1, and S1 does not receive a negative response packet that carries a MAC address of S1.

Step 2: After receiving a negative response packet that carries a MAC address of the MRA, the MRA records a MAC address and a priority of an MRA with a higher priority, and converts a role of the MRA to an MRC. In addition, a test propagation packet (MRP_TestPropagate packet) is sent through two ports. If the MRA does not receive, within preset duration, the negative response packet that carries the MAC address of the MRA, it indicates that the MRA is a node with a highest priority in the MRP ring network, and as a formal MRM role, the MRA starts to manage the MRP ring network.

The redundancy domain 100 shown in FIG. 1 is used as an example. S1 does not receive, within the preset duration, the negative response packet that carries the MAC address of S1, and as the formal MRM role, S1 starts to manage the MRP ring network.

Step 3: When an elected MRM leaves the MRP ring network or fails, an MRA election mechanism is restarted. All MRAs repeat the foregoing steps, and a new MRM is elected.

The following provides, based on the foregoing MRA election procedure, instance descriptions of the traffic protection method provided in embodiments of this application by using S1 to S4 included in the redundancy domain 100 shown in FIG. 1. S1 to S4 form the MRP ring network. The initial roles of S1 to S4 are all MRAs. An initial priority of S1 is 0xA001, an initial priority of S2 is 0xA004, an initial priority of S3 is 0xA002, and an initial priority of S4 is 0xA003. After the MRA election is performed and roles of the MRAs are stable, a role of S1 in the MRP ring network is an MRM, and roles of S2 to S4 in the MRP ring network are MRCs. HO_BestMRM_SA of all devices is S1_SA, namely, the MAC address of S1, and HO_BestMRM_Prio is S1_Prio, namely, the priority of S1.

FIG. 6A and FIG. 6B are a diagram 1 of interaction of a traffic protection method according to an embodiment of this application. As shown in FIG. 6A and FIG. 6B, an interaction procedure of the traffic protection method provided in this embodiment of this application in a phase in which a link failure occurs may include S601 to S616.

S601: S2 sets a priority of S2 as a first priority in response to a link failure occurring between S2 and S3.

The first priority may be an MRA highest priority, for example, 0x9000. In this way, the priority of S2 is adjusted from 0xA004 to 0x9000.

S602: S2 configures a role of S2 as an MRM based on the first priority.

S2 sends a test packet through a port, and the role of S2 is configured as an MRM if S2 does not receive, in n test packet periodicities, a negative response packet that carries a MAC address of S2.

One test packet periodicity may be duration of an interval at which S2 sends two test packets. Herein, n is a positive integer. For example, n is 2, 3, 5, or 10.

In a possible implementation, after S2 becomes an MRM, HO_BestMRM_SA of S2 is adjusted to S2_SA, and HO_BestMRM_Prio is S2_Prio, for example, 0x9000. In this way, the role of S2 is maintained as an MRM when S2 does not receive a test packet that carries HO_BestMRM_SA and HO_BestMRM_Prio whose priorities are higher than those recorded by S2. The role of S2 is switched to an MRC when S2 receives a test packet that carries HO_BestMRM_SA and HO_BestMRM_Prio whose priorities are higher than those recorded by S2.

S603: S3 sets a priority of S3 as the first priority in response to a link failure occurring between S2 and S3.

The first priority may be an MRA highest priority, for example, 0x9000. In this way, the priority of S3 is adjusted from 0xA002 to 0x9000.

S604: S3 configures a role of S3 as an MRM based on the first priority.

S3 sends a test packet through a port, and the role of S3 is configured as an MRM if S3 does not receive, in n test packet periodicities, a negative response packet that carries a MAC address of S3.

One test packet periodicity may be duration of an interval at which S3 sends two test packets. Herein, n is a positive integer. For example, n is 2, 3, 5, or 10.

In a possible implementation, after S3 becomes an MRM, HO_BestMRM_SA of S3 is adjusted to S3_SA, and HO_BestMRM_Prio is S3_Prio, for example, 0x9000.

S605: S1 sends a test packet through a port.

The test packet sent by S1 includes priority information of S1. The priority information of S1 includes a MAC address, for example, S1_SA, and a priority, for example, 0xA001, of S1.

In FIG. 6A and FIG. 6B, the test packet sent by S1 is represented as a test packet (S1).

S606: S2 sends a negative response packet to S1 based on the test packet sent by S1.

Because the priority of the S2 is higher than the priority of the S1, the negative response packet sent by the S2 includes the MAC address of S1.

For example, the negative response packet sent by S2 includes MRP_Prio, MRP_SA, MRP_OtherMRMPrio, and MRP_OtherMRMSA. MRP_Prio is the priority of S1, MRP_SA is the MAC address of S1, MRP_OtherMRMPrio is the priority of S2, and MRP_OtherMRMSA is the MAC address of S2.

In FIG. 6A and FIG. 6B, the negative response packet sent by S2 is represented as a negative response packet (S2).

In a possible implementation, S3 may send a negative response packet to S1 based on the test packet sent by S1, but S1 first receives the negative response packet sent by S2, and temporarily does not process the negative response packet sent by S3.

S607: S1 is downgraded to an MRC in response to receiving the negative response packet.

For example, S1 first receives the negative response packet that carries the MAC address of the S1 and that is sent by the S2, and S1 switches from the MRM to the MRC based on the negative response packet.

In a possible implementation, when S1 is downgraded to the MRC, based on the negative response packet of S2, HO_BestMRM_SA of S1 is adjusted to S2_SA, and HO_BestMRM_Prio of S1 is adjusted to 0x9000.

S608: S1 sends a test propagation packet.

The test propagation packet may be referred to as MRP_TestPropagate, and the test propagation packet sent by S1 may be represented as a test propagation packet (S1) in FIG. 6A and FIG. 6B. The test propagation packet includes the priority and the MAC address of S2.

S609: In response to receiving the test propagation packet, S4 adjusts HO_BestMRM_SA of S4 to S2_SA, and adjusts HO_BestMRM_Prio of S4 to 0x9000.

In a possible implementation, S4 may further continue to forward the test propagation packet.

S610: S2 sends the test packet through the port.

After S2 becomes an MRM, S2 sends the test packet through the port. The test packet sent by S2 includes the priority information of S2. The priority information of S2 includes the MAC address, for example, S2_SA, and the priority, for example, 0x9000, of S2.

In FIG. 6A and FIG. 6B, the test packet sent by S2 is represented as the test packet (S2).

S611: S3 sends the negative response packet to S2 based on the test packet sent by S2.

When S2 and S3 have a same priority, S3 sends the negative response packet to S2 because the MAC address of S2 is greater than the MAC address of S3.

For example, the negative response packet sent by S3 includes MRP_Prio, MRP_SA, MRP_OtherMRMPrio, and MRP_OtherMRMSA. MRP_Prio is the priority of S2, MRP_SA is the MAC address of S2, MRP_OtherMRMPrio is the priority of S3, and MRP_OtherMRMSA is the MAC address of S3.

In FIG. 6A and FIG. 6B, the negative response packet sent by S3 is represented as a negative response packet (S3).

S612: S2 is downgraded to an MRC in response to receiving the negative response packet.

S2 receives the negative response packet that carries the MAC address of S2 and that is sent by S3, and switches from the MRM to the MRC.

In a possible implementation, when S2 is downgraded to the MRC, S3 with a higher priority in S2 and S3 is determined based on the MAC address when a same priority is carried based on the negative response packet sent by S3. S2 adjusts HO_BestMRM_SA of S2 to S3_SA, adjusts HO_BestMRM_Prio of S2 to 0x9000, and adjusts the priority of the S2 to 0xA004.

S613: S2 sends the test propagation packet.

In FIG. 6A and FIG. 6B, the test propagation packet sent by S2 may be represented as the test propagation packet (S2), and the test propagation packet sent by S2 includes the priority and the MAC address of S3.

S614: In response to receiving the test propagation packet, S1 adjusts HO_BestMRM_SA of S1 to S3_SA, and adjusts HO_BestMRM_Prio of S1 to 0x9000.

In a possible implementation, S1 may further continue to forward the test propagation packet.

S615: In response to receiving the test propagation packet, S4 adjusts HO_BestMRM_SA of S4 to S3_SA, and adjusts HO_BestMRM_Prio of S4 to 0x9000.

S616: S3 sends the test packet through the port.

After S3 becomes an MRM, S3 sends the test packet through the port. The test packet sent by S3 includes the priority information of S3. The priority information of S3 includes the MAC address, for example, S3_SA, and the priority, for example, 0x9000, of S3.

In FIG. 6A and FIG. 6B, the test packet sent by S3 is represented as the test packet (S3).

When S2 and S3 have a same priority, because the MAC address of S2 is greater than the MAC address of S3, S2 does not process the test packet sent by S3.

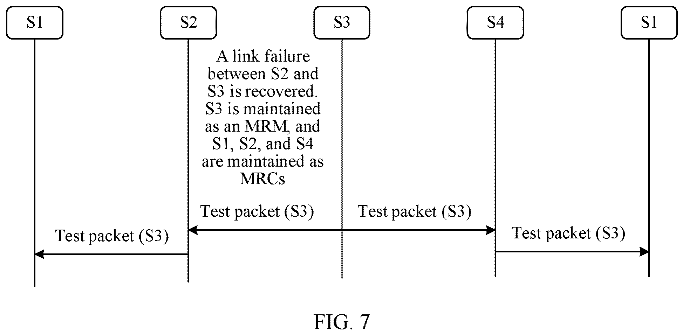

FIG. 7 is a diagram 2 of interaction of a traffic protection method according to an embodiment of this application. As shown in FIG. 7, in the traffic protection method provided in this embodiment of this application, after a failure is recovered, S3 continuously sends a test packet, S3 is maintained as an MRM, and S1, S2, and S4 are maintained as MRCs.

When a link failure occurs between S2 and S3, S3 blocks a port corresponding to a failed link based on an MRP protocol, to normally forward traffic through another port. Traffic cannot be normally forwarded through any port corresponding to the failed link before and after the link failure is recovered. A topology of an MRP ring network does not change. In this way, after the link failure is recovered, S3 does not sense a change in the topology of the MRP ring network, transmission of the traffic on a transmission path after a switch because the link failure occurs is maintained, and switching back to a transmission path before a switch because the link failure occurs is not performed.

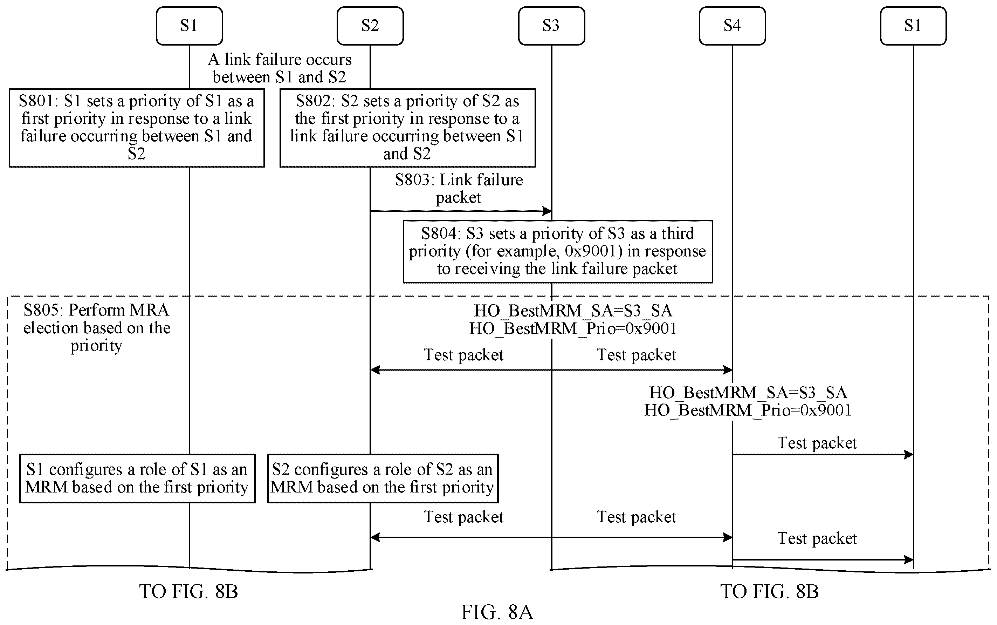

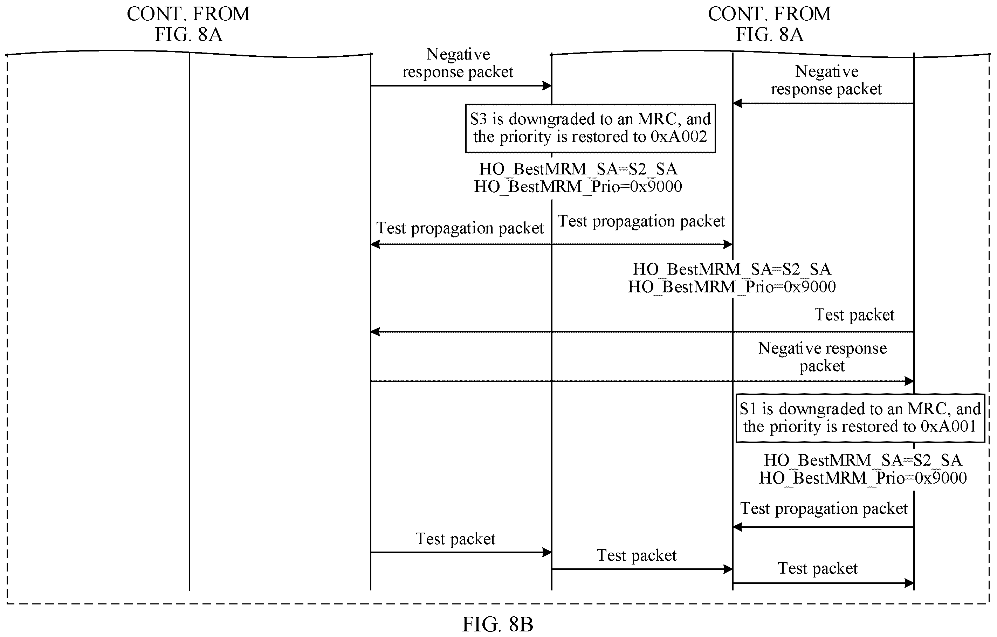

FIG. 8A and FIG. 8B are a diagram 3 of interaction of a traffic protection method according to an embodiment of this application. As shown in FIG. 8A and FIG. 8B, in the traffic protection method provided in this embodiment of this application, after a link failure occurs again, for example, a link between S1 and S2 is disconnected, an MRM in an MRP ring network dynamically migrates with a failed link, that is, an adjacent MRC of the failed link is elected as a new MRM based on an MRA election procedure. An interaction procedure of the traffic protection method provided in this embodiment of this application in a phase in which a link failure occurs again may include S801 to S805.

S801: S1 sets a priority of S1 as a first priority in response to a link failure occurring between S1 and S2.

The first priority may be an MRA highest priority, for example, 0x9000. In this way, the priority of S1 is adjusted from 0xA001 to 0x9000.

S802: S2 sets a priority of S2 as the first priority in response to a link failure occurring between S1 and S2.

The first priority may be an MRA highest priority, for example, 0x9000. In this way, the priority of S1 is adjusted from 0xA004 to 0x9000.

S803: S2 sends a link failure packet in response to a link failure occurring between S1 and S2.

The link failure packet may also be referred to as an MRP_LinkDown packet, and indicates a message indicating a network connection or a link disconnection.

S804: S3 sets a priority of S3 as a third priority in response to receiving the link failure packet.

The third priority may be lower than the first priority but is higher than a priority of another MRC in the MRP ring network, for example, 0x9001. In this way, the priority of S3 is adjusted from 0x9000 to 0x9001.

S805: S1 to S4 perform MRA election based on respective priorities.

In the MRA election procedure, priorities of S1 and S2 in the MRP ring network are the highest, and a MAC address, for example, S2_SA, of S2 is smaller than a MAC address, for example, S1_SA, of S1. S2 is finally elected as an MRM, S1, S3, and S4 are elected as MRCs, HO_BestMRM_SA of each communication apparatus is updated to S2_SA, and HO_BestMRM_Prio is updated to 0x9000.

The MRA election procedure may include a plurality of steps after S804 shown in FIG. 8A and FIG. 8B. For specific content of the MRA election procedure, refer to an MRA election principle shown in FIG. 5 and the MRA election procedure shown in FIG. 6A and FIG. 6B. Details are not described herein again.

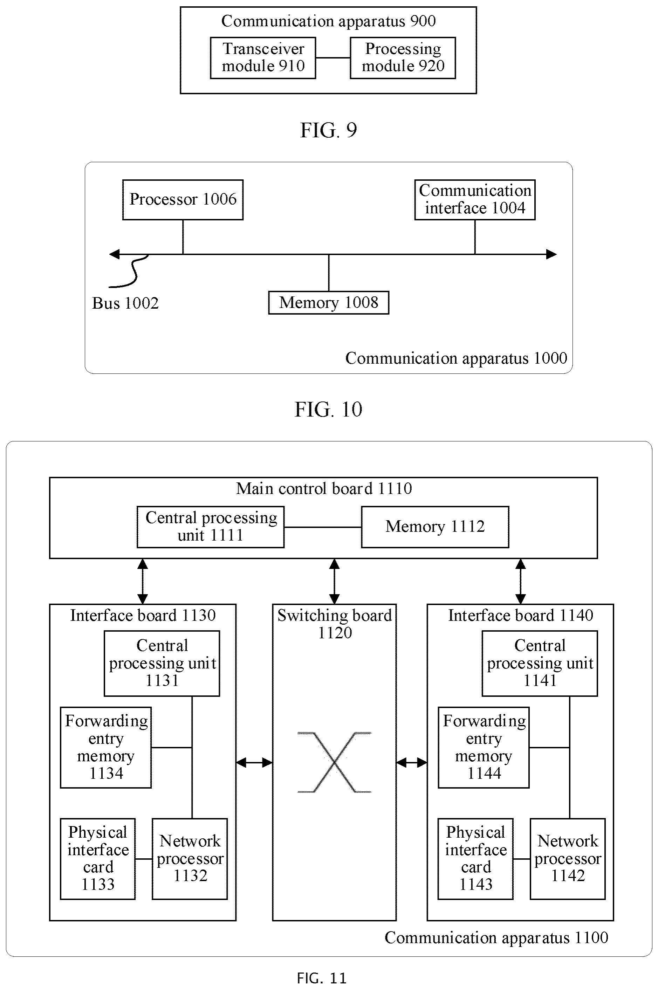

The foregoing describes the traffic protection method provided in embodiments of this application and implementations thereof in detail with reference to FIG. 1 to FIG. 8A and FIG. 8B. The following describes a communication apparatus provided in this application with reference to FIG. 9. The communication apparatus may be configured to: implement any communication apparatus (for example, the first MRC or the second MRC, or S1 to S4 in the communication system shown in FIG. 1) provided in the foregoing method embodiments, and implement functions performed by the any communication apparatus. As shown in FIG. 9, a communication apparatus 900 includes a transceiver module 910 and a processing module 920.

The communication apparatus 900 is configured to implement the traffic protection method provided in embodiments of this application. The transceiver module 910 and the processing module 920 are collaboratively configured to elect a first MRC as a first MRM in response to a link failure occurring between the first MRC and a second MRC on a first forwarding path.

In a possible implementation, the processing module 920 is specifically configured to: adjust a priority of the first MRC from a second priority to a first priority; and elect the first MRC as the first MRM based on the first priority in MRA election.

In a possible implementation, the first priority is a highest priority currently existing in the MRP ring network.

In a possible implementation, the first priority is a highest priority of an MRA in a configurable priority range that is in the MRP ring network and that is specified in an MRP.

In a possible implementation, the first priority is 0x9000.

In a possible implementation, the processing module 920 is further configured to: also adjust a priority of the second MRC to the first priority when a link failure occurs between the first MRC and the second MRC; and elect the first MRC as the first MRM based on a MAC address of the first MRC and a MAC address of the second MRC in a case of a same priority.

In a possible implementation, the processing module 920 is further configured to adjust a priority of the first MRM from the first priority to a third priority. The third priority is lower than the first priority and is higher than a priority of an MRC in the MRP ring network other than the first MRM.

In a possible implementation, the processing module 920 is further configured to block a first port of the first MRM. The first port is a port through which the first MRM is connected to the second MRC.

In a possible implementation, the processing module 920 is specifically configured to: indicate the first MRC to send a first MRP test packet through a port, where the first MRP test packet includes a media access control MAC address of the first MRC and the first priority, and the first MRP test packet indicates an MRA that receives the test packet not to respond to the first MRP test packet when a local priority is lower than the first priority; and indicate the first MRC to determine that a negative response packet that carries the MAC address of the first MRC is not received within preset duration, and configure an MRA role as the first MRM.

In a possible implementation, the processing module 920 is specifically configured to: set a best MRM source address of the first MRC as a MAC address of the first MRM; and set a best MRM priority of the first MRC as the first priority.

In a possible implementation, the transceiver module 910 is specifically configured to: receive, by using the first MRM, a second MRP test packet sent by the second MRM, where the second MRP test packet includes the MAC address of the second MRM and the first priority; and send, by using the first MRM, a negative response packet to the second MRM when the MAC address of the first MRM is less than the MAC address of the second MRM, where the negative response packet includes the MAC address of the first MRM. The processing module 920 is specifically configured to: in response to receiving the negative response packet, configure, by using the second MRM, the MRP role of the second MRM as the MRC when the MAC address of the first MRM is less than the MAC address of the second MRM.

In a possible embodiment of this application, the communication apparatus 900 serves as an MRM in an MRP ring network, for example, S1 in the traffic protection method shown in FIG. 3a, or S1 in the traffic protection method shown in FIG. 6A and FIG. 6B. The transceiver module 910 is configured to periodically receive/send a test packet through a port. The processing module 920 is configured to determine, based on whether a timeout occurs when the test packet is received, whether a link failure occurs.

In a possible implementation, the communication apparatus 900 serves as an adjacent communication apparatus of a failed link, for example, the first MRC in the traffic protection method shown in FIG. 3a, or S3 in the traffic protection method shown in FIG. 6A and FIG. 6B. The processing module 920 is configured to adjust a priority of the first MRC from a second priority to a first priority. The transceiver module 910 and the processing module 920 are collaboratively configured to elect the first MRC as the first MRM based on the first priority in MRA election.

Optionally, the transceiver module 910 is specifically configured to send a first MRP test packet through a port. The first MRP test packet includes a MAC address of the first MRC and the first priority, and the first MRP test packet indicates an MRA that receives the test packet not to respond to the first MRP test packet when a local priority is lower than the first priority. The processing module 920 is specifically configured to configure an MRA role as the first MRM when a negative response packet that carries the MAC address of the first MRC is not received within preset duration.

Optionally, the processing module 920 is further configured to: set a best MRM source address as a MAC address of the first MRM; and set a best MRM priority as the first priority.

In a possible implementation, the first priority is a highest priority currently existing in the MRP ring network.

In a possible implementation, the first priority is a highest priority of an MRA in a configurable priority range that is in the MRP ring network and that is specified in an MRP. Optionally, the first priority is 0x9000.

In a possible implementation, the processing module 920 is further configured to block a first port of the first MRM. The first port is a port through which the first MRM is connected to the second MRC.

In a possible implementation, the processing module 920 is further configured to adjust a priority of the first MRM from the first priority to a third priority. The third priority is lower than the first priority and is higher than a priority of an MRC in the MRP ring network other than the first MRM.

In a possible implementation, the transceiver module 910 is further configured to receive a second MRP test packet. The second MRP test packet includes the MAC address of the second MRM and the first priority. The transceiver module 910 is further configured to send a negative response packet to the second MRM when the MAC address of the first MRM is less than the MAC address of the second MRM. The negative response packet includes the MAC address of the first MRM.

In a possible embodiment of this application, the communication apparatus 900 serves as an adjacent communication apparatus of a failed link, for example, the second MRC in the traffic protection method shown in FIG. 3a, or S2 in the traffic protection method shown in FIG. 6A and FIG. 6B. The processing module 920 is configured to adjust the priority of the second MRC to the first priority. The transceiver module 910 and the processing module 920 are collaboratively configured to elect the second MRC as the second MRM based on the first priority in MRA election.

Optionally, the transceiver module 910 is specifically configured to send an MRP test packet and receive an MRP test packet through a port. The MRP test packet includes the MAC address of the second MRC and the first priority. The processing module 920 is specifically configured to configure an MRA role as the second MRM when a negative response packet that carries the MAC address of the second MRC is not received within preset duration.

Optionally, the processing module 920 is further configured to: set a best MRM source address as a MAC address of the second MRM; and set a best MRM priority as the first priority.

In a possible implementation, after the second MRC is referred to as the second MRM, the transceiver module 910 is further configured to send the second MRP test packet through a port. The second MRP test packet includes the MAC address of the second MRC and the first priority. The transceiver module 910 is further configured to receive the negative response packet. The negative response packet includes the MAC address of the first MRM. The processing module 920 is further configured to: in response to receiving the negative response packet, configure the MRP role of the second MRM as the MRC when the MAC address of the first MRM is less than the MAC address of the second MRM.

Optionally, the processing module 920 is further configured to: set a best MRM source address as a MAC address of the first MRM; and set a best MRM priority as the first priority.

For more specific descriptions of functions performed by the communication apparatus, refer to related descriptions of the traffic protection method and the implementations thereof provided in FIG. 3a to FIG. 8A and FIG. 8B.

The foregoing modules may be implemented by using software, or may be implemented by using hardware, or may be implemented by using a combination of software and hardware. For example, the following describes implementations of the transceiver module 910 and the processing module 920.

As an example of a software functional unit, the transceiver module 910 or the processing module 920 may include code running on a device instance. The device instance may be at least one of a physical device (for example, a switch, a router, or a server) or a virtualized device (for example, a virtual machine). Further, there may be one or more device instances. For example, the transceiver module 910 or the processing module 920 may include code running on a plurality of physical devices/virtualized devices.

In an example of a hardware functional unit, the transceiver module 910 or the processing module 920 may include at least one hardware device. For example, the transceiver module 910 may include a network interface card or a transceiver. The processing module 920 may include any one or more of processors such as a central processing unit (central processing unit, CPU), a digital signal processor (digital signal processor, DSP), a network processor (network processor, NP), a neural-network processing unit (neural-network processing unit, NPU), a data processing unit (Data Processing Unit, DPU), and a microprocessor (microprocessor, MP). Alternatively, the processing module 920 may be a device, a component, or the like implemented by using an application-specific integrated circuit (application-specific integrated circuit, ASIC) or a programmable logic device (programmable logic device, PLD).

An embodiment of this application further provides a communication apparatus 1000, as an example in which the communication apparatus is a hardware device. The communication apparatus 1000 provided in this embodiment of this application may serve as any communication apparatus (for example, the first MRC or the second MRC, or S1 to S4 in the communication system shown in FIG. 1) or any device (for example, the foregoing switch or router) having communication and processing capabilities provided in embodiments of this application.

As shown in FIG. 10, the communication apparatus 1000 includes a bus 1002, a communication interface 1004, a processor 1006, and a memory 1008. The communication interface 1004, the processor 1006, and the memory 1008 communicate with each other through the bus 1002. It should be understood that, a quantity of processors and a quantity of memories in the communication apparatus 1000 are not limited in this application. Optionally, the processor 1006 in the communication apparatus 1000 may be connected to a display and an input device (not shown in FIG. 10) through the communication interface 1004.

The bus 1002 may be classified into an address bus, a data bus, a control bus, and the like. For ease of representation, the bus is represented by using only one line in FIG. 10, but it does not mean that there is only one bus or only one type of bus. The bus 1002 may include a path for transmitting information between various components (for example, the communication interface 1004, the processor 1006, and the memory 1008) of the communication apparatus 1000.

The communication interface 1004 is a transceiver module, for example, but not limited to, a network interface card or a transceiver, to implement communication between the communication apparatus 1000 and a device or a communication network. The communication interface 1004 may include a wired communication interface, and may further include a wireless communication interface. Specifically, the communication interface 1004 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof.

The display may include various display devices such as a plasma display and a liquid crystal display that can implement a display function. The communication apparatus 1000 may implement a display function through the display. The input device may include various input devices such as a keyboard, a mouse, and a touchscreen that can implement an information/signal input.

The processor 1006 may include a CPU, a DSP, an NP, an NPU, a DPU, an MP, or one or more integrated circuits configured to implement the solution of this application. For example, the processor 1006 includes an ASIC, a PLD or another programmable logic device, a transistor logic device, a hardware component, or any combination thereof. The PLD is, for example, a complex programmable logic device (complex programmable logic device, CPLD), a field-programmable gate array (field-programmable gate array, FPGA), a generic array logic (generic array logic, GAL), or any combination thereof. The processor may implement or execute various logical blocks, modules, and circuits described with reference to the content disclosed in embodiments of the present invention. Alternatively, the processor may be a combination implementing a computing function, for example, a combination including one or more microprocessors, or a combination of the DSP and the microprocessor. In this embodiment of this application, the processor 1006 may be configured to perform the steps or operations of the traffic protection method provided in FIG. 3a, FIG. 4, or FIG. 6A and FIG. 6B to FIG. 8A and FIG. 8B in embodiments of this application.

The memory 1008 may include a volatile memory (volatile memory), for example, a random access memory (random access memory, RAM). The memory 1008 may further include a non-volatile memory (non-volatile memory), for example, a read-only memory (read-only memory, ROM), a flash memory, a hard disk drive (hard disk drive, HDD), or a solid-state drive (solid-state drive, SSD). Alternatively, the memory 1008 is any other medium that can be used to carry or store expected program code in a form of instructions or a data structure and that can be accessed by a computer.

The memory 1008 may store program code for performing the solution of this application, and the processor 1006 may execute the program code stored in the memory 1008. In other words, the communication apparatus 1000 may implement, by using the processor 1006 and the program code in the memory 1008, the steps or operations of the traffic protection method provided in FIG. 3a, FIG. 4, or FIG. 6A and FIG. 6B to FIG. 8A and FIG. 8B in embodiments of this application. The program code may include one or more software modules. Optionally, the processor 1006 may also store program code or instructions for executing the solutions of this application.

In a specific embodiment, the communication apparatus 1000 may correspond to any one of the foregoing communication apparatuses (for example, the first MRC or the second MRC, or S1 to S4 in the communication system shown in FIG. 1). The processor 1006 reads instructions in the memory 1008, so that the communication apparatus 1000 can perform an operation performed by any communication apparatus.

In a specific embodiment, the memory 1008 stores executable program code used to implement functions of the transceiver module 910 and the processing module 920. The processor 1006 executes the executable program code to implement the functions of the transceiver module 910 and the processing module 920.

An embodiment of this application further provides a communication apparatus 1100. The communication apparatus 1100 is another example of a hardware device. The communication apparatus 1100 provided in this embodiment of this application may serve as a network device (for example, a switch or a router) in embodiments of this application. Any communication apparatus (for example, a first MRC or a second MRC, or S1 to S4 in the communication system shown in FIG. 1) provided in embodiments of this application may be implemented on the communication apparatus 1100.

As shown in FIG. 11, the communication apparatus 1100 includes a main control board 1110 and an interface board 1130.

The main control board 1110 is also referred to as a main processing unit (main processing unit, MPU) or a route processor card (route processor card). The main control board 1110 is configured to control and manage each component in the communication apparatus 1100, including functions of route calculation, device management, device maintenance, and protocol processing. The main control board 1110 includes a central processing unit 1111 and a memory 1112.

The interface board 1130 is also referred to as a line interface unit card (line processing unit, LPU), a line card (line card), or a service board. The interface board 1130 is configured to: provide various service interfaces and implement data packet forwarding. The service interfaces include but are not limited to an Ethernet interface and a POS (packet over SONET/SDH) interface. The Ethernet interface is, for example, a flexible Ethernet service interface (flexible ethernet clients, FlexE Clients). The interface board 1130 includes a central processing unit 1131, a network processor 1132, a forwarding entry memory 1134, and a physical interface card (physical interface card, PIC) 1133.

The central processing unit 1131 on the interface board 1130 is configured to: control and manage the interface board 1130, and communicate with the central processing unit 1111 on the main control board 1110.

The network processor 1132 is configured to implement packet forwarding processing. A form of the network processor 1132 may be a forwarding chip. Specifically, the network processor 1132 is configured to: forward a received packet based on a forwarding table stored in the forwarding entry memory 1134, and if a destination address of the packet is an address of the communication apparatus 1100, send the packet to a CPU (for example, the central processing unit 1111) for processing; or if the destination address of the packet is not an address of the communication apparatus 1100, find, in the forwarding table based on the destination address, a next hop and an outbound interface that correspond to the destination address, and forward the packet to the outbound interface corresponding to the destination address. Processing of an uplink packet includes processing an inbound interface of the packet and searching the forwarding table. Processing of a downlink packet includes searching the forwarding table, and the like.

The physical interface card 1133 is configured to implement a physical layer interconnection function. Original traffic enters the interface board 1130, and a processed packet is sent from the physical interface card 1133. The physical interface card 1133 is also referred to as a sub-card, may be installed on the interface board 1130, and is responsible for converting an optoelectronic signal into a packet, performing a validity check on the packet, and forwarding the packet to the network processor 1132 for processing. In some embodiments, the central processing unit may further execute a function of the network processor 1132, for example, implement software forwarding based on a general-purpose CPU. In this way, the physical interface card 1133 does not need the network processor 1132.

Optionally, the communication apparatus 1100 includes a plurality of interface boards. For example, the communication apparatus 1100 further includes an interface board 1140. The interface board 1140 includes a central processing unit 1141, a network processor 1142, a forwarding entry memory 1144, and a physical interface card 1143.

Optionally, the communication apparatus 1100 further includes a switching board 1120. The switching board 1120 may also be referred to as a switch fabric unit (switch fabric unit, SFU). When the communication device has a plurality of interface boards 1130, the switching board 1120 is configured to complete data exchange between interface boards. For example, the interface board 1130 and the interface board 1140 may communicate through the switching board 1120.

The main control board 1110 is coupled to the interface board 1130. For example, the main control board 1110, the interface board 1130, the interface board 1140, and the switching board 1120 are connected to a system backplane through a system bus, to implement interworking. In a possible implementation, an inter-process communication (inter-process communication, IPC) channel is established between the main control board 1110 and the interface board 1130, and the main control board 1110 and the interface board 1130 communicate with each other through the IPC channel.

Logically, the communication apparatus 1100 includes a control plane and a forwarding plane. The control plane includes the main control board 1110 and the central processing unit 1131, and the forwarding plane includes components for performing forwarding such as the forwarding entry memory 1134, the physical interface card 1133, and the network processor 1132. The control plane performs functions such as a router, forwarding table generation, signaling and protocol packet processing, and device status configuration and maintenance. The control plane delivers a generated forwarding table to the forwarding plane. On the forwarding plane, the network processor 1132 searches a table for and forwards, based on the forwarding table delivered by the control plane, a packet received by the physical interface card 1133. The forwarding table delivered by the control plane may be stored in the forwarding entry memory 1134. In some embodiments, the control plane and the forwarding plane may be completely separate and not on a same device.

In this embodiment of this application, an operation on the interface board 1140 is consistent with an operation on the interface board 1130. For brevity, details are not described again. The communication apparatus 1100 in this embodiment may correspond to the communication device in the foregoing method embodiments. The main control board 1110, the interface board 1130, and/or the interface board 1140 in the communication apparatus 1100 may implement functions of the communication apparatus in the foregoing method embodiments and/or various steps implemented by the communication apparatus. For brevity, details are not described herein again.

It should be noted that there may be one or more main control boards; and when there are a plurality of main control boards, a primary main control board and a secondary main control board may be included. There may be one or more interface boards, and the communication apparatus with a stronger data processing capability provides more interface boards. There may also be one or more physical interface cards on the interface board. There may be no switching board or one or more switching boards. When there are a plurality of switching boards, load balancing and redundancy backup may be implemented together. In a centralized forwarding architecture, the communication apparatus may not need a switching board, and the interface board provides a function of processing service data of an entire system. In a distributed forwarding architecture, the communication apparatus may include at least one switching board, to implement data exchange between a plurality of interface boards through the switching board, and provides a large-capacity data exchange and processing capability. Therefore, the data access and processing capability of the communication apparatus in the distributed architecture is higher than that of a device in the centralized architecture. Optionally, a form of the communication apparatus may alternatively include only one card. In other words, there is no switching board, and a function of the interface board and a function of the main control board are integrated on the card. In this case, a central processing unit on the interface board and a central processing unit on the main control board may be combined into one central processing unit on the card, to perform a superimposed function of the two central processing units. A data exchange and processing capability of a device in the form is low (for example, a communication apparatus such as a low-end switch or a low-end router). A specific architecture that is to be used depends on a specific networking deployment scenario. This is not limited herein.

In a specific embodiment, any one of the foregoing communication apparatuses may be implemented on the communication apparatus 1100. The memory 1112 of the main control board 1110 can store instructions (for example, store instructions for implementing functions of the transceiver module 910 and the processing module 920) used to implement functions executed by the communication apparatus. The central processing unit 1111 of the main control board 1110 executes the instructions in the memory 1112, and can perform the functions executed by the communication apparatus together with other components such as the interface board 1130 and the switching board 1120.

In some possible implementations, any communication apparatus provided in this embodiment of this application may be a virtualized device. For example, the virtualized device may be a virtual machine (virtual machine, VM), and the virtual machine is deployed on the hardware device (for example, a physical host). The virtual machine is a complete software-simulated computer system that has complete hardware system functions and that runs in an entirely isolated environment. The virtual machine may be configured as the communication apparatus in embodiments of this application. For example, each communication apparatus may be implemented based on a general-purpose physical host in combination with a network functions virtualization (network functions virtualization, NFV) technology. The communication apparatus is a virtual host, a virtual router, or a virtual switch. A person skilled in the art may virtualize, on a general-purpose physical host based on an NFV technology by reading this application, communication apparatuses having the functions in embodiments of this application.

In some possible implementations, any communication apparatus provided in embodiments of this application may be a processor or a chip. The chip may include a processor and a power supply circuit, and the power supply circuit is configured to supply power to the processor. In a specific embodiment, the processor or the chip may correspond to any one of the foregoing communication apparatuses, and the processor or the chip can perform an operation performed by any one of the communication apparatuses.

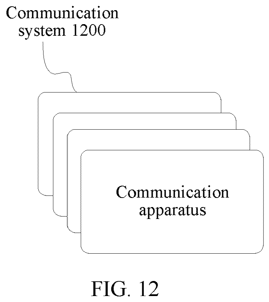

An embodiment of this application further provides a communication system 1200. As shown in FIG. 12, the communication system includes one or more communication apparatuses. The communication apparatus may be any one or a combination of a plurality of communication apparatuses 900. One or a combination of a plurality of communication apparatuses may jointly perform the steps or operations of the traffic protection method provided in FIG. 3a, FIG. 4, or FIG. 6A and FIG. 6B to FIG. 8A and FIG. 8B in embodiments of this application.

Memories in the one or more communication apparatuses in the communication system 1200 may store same instructions used to perform the traffic protection method provided in FIG. 3a, FIG. 4, or FIG. 6A and FIG. 6B to FIG. 8A and FIG. 8B in embodiments of this application. Alternatively, memories in the one or more communication apparatuses in the communication system 1200 each may store a part of instructions used to perform the traffic protection method provided in FIG. 3a, FIG. 4, or FIG. 6A and FIG. 6B to FIG. 8A and FIG. 8B in embodiments of this application. In other words, one or a combination of a plurality of communication apparatuses may jointly perform instructions used to perform the traffic protection method provided in FIG. 3a, FIG. 4, or FIG. 6A and FIG. 6B to FIG. 8A and FIG. 8B in embodiments of this application.

In a specific embodiment, memories in different communication apparatuses in the communication system 1200 may store different instructions. In other words, the instructions stored in the memory in the communication apparatus may implement functions of the foregoing transceiver module 910 and the foregoing processing module 920.

In some possible implementations, one or more communication apparatuses in the communication system 1200 may be connected through a network. The network may be a wide area network, a local area network, or the like.

An embodiment of this application further provides another communication system. The communication system includes one or more processors and one or more memories. The one or more memories store instructions used to implement the traffic protection method provided in FIG. 3a, FIG. 4, or FIG. 6A and FIG. 6B to FIG. 8A and FIG. 8B in embodiments of this application. The one or more processors can perform the traffic protection method provided in FIG. 3a, FIG. 4, or FIG. 6A and FIG. 6B to FIG. 8A and FIG. 8B in embodiments of this application by executing the instructions in the one or more memories. For more related descriptions of implementations of the processor and the memory, refer to the foregoing related descriptions of the processor and the memory.

An embodiment of this application further provides a chip, including a processing circuit and an interface circuit. The foregoing traffic protection method is performed by using the interface circuit and the processing circuit.

An embodiment of this application further provides a computer program product. The computer program product may be software or a program product that includes instructions and that can run on a communication apparatus or a processor (for example, run on one or more processors of the communication apparatus 900, the communication apparatus 1000, the communication apparatus 1100, or the communication system 1200) or that is stored in any available medium. The instructions included in the computer program product may include instructions used to perform the steps or operations of the traffic protection method provided in FIG. 3a, FIG. 4, or FIG. 6A and FIG. 6B to FIG. 8A and FIG. 8B in embodiments of this application. When the computer program product runs on a communication apparatus or a processor (for example, runs on one or more processors of the communication apparatus 900, the communication apparatus 1000, the communication apparatus 1100, or the communication system 1200), the steps or operations of the traffic protection method provided in FIG. 3a, FIG. 4, or FIG. 6A and FIG. 6B to FIG. 8A and FIG. 8B in embodiments of this application are implemented.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the communication apparatus or the processor to perform the steps or operations of the traffic protection method provided in FIG. 3a, FIG. 4, or FIG. 6A and FIG. 6B to FIG. 8A and FIG. 8B in embodiments of this application.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape, may be an optical medium, for example, a digital video disc (digital video disc, DVD), or may be a semiconductor medium, for example, a solid-state drive (solid-state drive, SSD). The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

Finally, it should be noted that, the foregoing embodiments are merely intended for describing the technical solutions of this application, but not for limiting this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

In the specification, claims, and accompanying drawings of this application, the terms such as "first", "second", and "third" are intended to distinguish between different objects but do not limit a particular order.

In embodiments of this application, the term "example", "for example", or the like is used to give an example, an illustration, or a description. Any embodiment or design scheme described as an "example" or "for example" in embodiments of this application should not be construed as being more preferred or more advantageous than another embodiment or design scheme. Exactly, use of the term "example", "for example", or the like is intended to present a related concept in a specific manner.

## Claims

1. A traffic protection method, applied to a media redundancy protocol MRP ring network, wherein the MRP ring network comprises a first forwarding path for carrying traffic and a second forwarding path for traffic protection, and the method comprises:
electing a first media redundancy client MRC as a first media redundancy manager MRM in response to a link failure occurring between the first MRC and a second MRC on the first forwarding path;
switching a transmission path of the traffic from the first forwarding path to the second forwarding path after the link failure occurs; and
after the link failure is recovered, when the second forwarding path is normal, still maintaining transmission of the traffic on the second forwarding path, and skipping switching back to the first forwarding path.

2. The method according to claim 1, wherein electing the first MRC as the first MRM comprises:
adjusting a priority of the first MRC from a second priority to a first priority; and
electing the first MRC as the first MRM based on the first priority in media redundancy automanager MRA election.

3. The method according to claim 2, wherein the first priority is a highest priority currently existing in the MRP ring network.

4. The method according to claim 3, wherein the first priority is a highest priority of an MRA in a configurable priority range that is in the MRP ring network and that is specified in an MRP.

5. The method according to any one of claims 2 to 4, wherein the first priority is 0x9000.

6. The method according to any one of claims 2 to 5, wherein the method further comprises:
also adjusting a priority of the second MRC to the first priority when a link failure occurs between the first MRC and the second MRC; and
electing the first MRC as the first MRM based on a MAC address of the first MRC and a MAC address of the second MRC in a case of a same priority.

7. The method according to any one of claims 1 to 6, wherein after electing the first MRC as the first MRM, the method further comprises:
adjusting a priority of the first MRM from the first priority to a third priority, wherein the third priority is lower than the first priority and is higher than a priority of an MRC in the MRP ring network other than the first MRM.

8. The method according to any one of claims 1 to 7, wherein the method further comprises:
blocking a first port of the first MRM, wherein the first port is a port through which the first MRM is connected to the second MRC.

9. The method according to any one of claims 2 to 4, wherein electing the first MRC as the first MRM based on the first priority in the MRA election comprises:
sending, by the first MRC, a first MRP test packet through a port, wherein the first MRP test packet comprises a media access control MAC address of the first MRC and the first priority, and the first MRP test packet indicates an MRA that receives the test packet not to respond to the first MRP test packet when a local priority is lower than the first priority; and
determining, by the first MRC, that a negative response packet that carries the MAC address of the first MRC is not received within preset duration, and configuring an MRA role as the first MRM.

10. The method according to claim 9, wherein the method further comprises:
setting, by the first MRC, a best MRM source address as a MAC address of the first MRM; and
setting, by the first MRC, a best MRM priority as the first priority.

11. The method according to claim 6, wherein configuring an MRP role of the second MRM as an MRC based on a MAC address of the first MRM and a MAC address of the second MRM comprises:
receiving, by the first MRM, a second MRP test packet sent by the second MRM, wherein the second MRP test packet comprises the MAC address of the second MRM and the first priority;
sending, by the first MRM, a negative response packet to the second MRM when the MAC address of the first MRM is less than the MAC address of the second MRM, wherein the negative response packet comprises the MAC address of the first MRM; and
in response to receiving the negative response packet, configuring, by the second MRM, the MRP role of the second MRM as the MRC when the MAC address of the first MRM is less than the MAC address of the second MRM.

12. A communication system, wherein the communication system comprises a plurality of communication apparatuses forming an MRP ring network, each of the plurality of communication apparatuses is connected to a previous communication apparatus and a next communication apparatus respectively through two ports to form an MRP ring, the MRP ring network comprises a first forwarding path for bearing traffic and a second forwarding path for protecting the traffic, the plurality of communication apparatuses comprise a first MRC and a second MRC, the first MRC and the second MRC are configured to collaboratively elect the first MRC as a first media redundancy manager MRM in response to a link failure occurring between the first media redundancy client MRC and a second MRC on the first forwarding path;
a transmission path of the traffic is switched from the first forwarding path to the second forwarding path after the link failure occurs; and
after the link failure is recovered, when the second forwarding path is normal, transmission of the traffic on the second forwarding path is still maintained, and switching back to the first forwarding path is skipped.

13. A communication apparatus, wherein configured to perform the method according to any one of claims 1 to 11.

14. A computer program product comprising instructions, wherein when the instructions are run by a communication apparatus, the communication apparatus is enabled to perform the method according to any one of claims 1 to 11.

15. A computer-readable storage medium, comprising computer program instructions, wherein when the computer program instructions are executed by a communication apparatus, the communication apparatus performs the method according to any one of claims 1 to 11.
